# EUROPEAN PATENT APPLICATION

(11) **EP 2 784 660 A2**
(43) Date of publication of application: **01.10.2014**
(21) Application number: 14161781.1
(22) Date of filing: 26.03.2014
(51) Int. Cl.: G06F 3/12

(54) **Print system and information processing device**

(30) Priority: 27.03.2013 JP 2013065790
(71) Applicant: Seiko Epson Corporation, Shinjuku-ku Tokyo (JP)
(72) Inventor: Endo, Tsunenobu, Suwa-shi, Nagano 392-8502 (JP)
(74) Representative: Miller Sturt Kenyon

(57) **Abstract**

A print system includes: a cartridge information reading unit that reads out cartridge information including tape color information about a color of a print surface of tape-like member housed in a cartridge installed in a tape printing device and ink color information about a color of an ink ribbon housed in the cartridge, from a cartridge information recording unit provided in the cartridge; a cartridge information acquisition unit that acquires the read-out cartridge information; and a display unit that shows a color display of the color of the print surface of the tape-like member and the color of the ink ribbon, based on the tape color information and the ink color information included in the acquired cartridge information.

## Description

### BACKGROUND

### 1. Technical Field

The present invention relates to a print system having a tape printing device that prints on a tape-like member, using an ink ribbon, and an information processing device forming the print system.

### 2. Related Art

According to the related art, a tape printing device is known in which a tape cassette provided with a rear identification portion (hole) for specifying color information about the color of a print tape housed therein and the color of an ink ribbon housed therein is installed, then the rear identification portion is detected by a rear detection switch, and the color of the print tape and the color of the ink ribbon (character color) are shown on a display as text information based on the detected result (see JP-A-2011-011404).

However, since the related-art tape printing device shows the color of the print tape and the color of the ink ribbon as text information, the user can learn the color of the print tape and the color of the ink ribbon but finds it hard to grasp a specific print image thereof.

### SUMMARY

An advantage of some aspects of the invention is the provision of a print system that displays a print image of the color of a print surface of a tape-like member and the color of an ink ribbon in such a way that the user can specifically grasp the print image, and an information processing device forming the print system.

An aspect of the invention is directed to a print system including: a cartridge information reading unit that reads out cartridge information including tape color information about a color of a print surface of tape-like member housed in a cartridge installed in a tape printing device and ink color information about a color of an ink ribbon housed in the cartridge, from a cartridge information recording unit provided in the cartridge; a cartridge information acquisition unit that acquires the read-out cartridge information; and a display unit that shows a color display of the color of the print surface of the tape-like member and the color of the ink ribbon, based on the tape color information and the ink color information included in the acquired cartridge information.

Another aspect of the invention is directed to an information processing device including: a cartridge information acquisition unit that acquires cartridge information including tape color information about a color of a print surface of tape-like member housed in a cartridge installed in a tape printing device and ink color information about a color of an ink ribbon housed in the cartridge, read out from a cartridge information recording unit provided in the cartridge; and a display unit that shows a color display of the color of the print surface of the tape-like member and the color of the ink ribbon, based on the tape color information and the ink color information included in the acquired cartridge information.

According to these configurations, based on the cartridge information read out from the cartridge information recording unit of the cartridge installed in the tape printing device, that is, based on the tape color information about the color of the print surface of the tape-like member and the ink color information about the color of the ink ribbon, the display unit shows a color display of the color of the print surface of the tape-like member and the color of the ink ribbon. Therefore, a print image of the color of the print surface of the tape-like member and the color of the ink ribbon (character color) can be displayed in such a way that the user can specifically grasp the print image.

Still another aspect of the invention is directed to a print system including: an identification information reading unit that reads out identification information specific to a cartridge installed in a tape printing device, from an identification information recording unit provided in the cartridge; an association information recording unit that records association information which associates the identification information with cartridge information including tape color information about a color of a print surface of a tape-like member housed in the cartridge and an ink color information about a color of an ink ribbon housed in the cartridge; an identification information acquisition unit that acquires the read-out identification information; a cartridge information acquisition unit that acquires the cartridge information associated with the acquired identification information; and a display unit that shows a color display of the color of the print surface of the tape-like member and the color of the ink ribbon, based on the tape color information and the ink color information included in the acquired cartridge information.

Yet another aspect of the invention is directed to an information processing device including: an identification information acquisition unit that acquires identification information specific to a cartridge installed in a tape printing device, read out from an identification information recording unit provided in the cartridge; a cartridge information acquisition unit that acquires cartridge information associated with the acquired identification information, based on association information which associates the identification information with the cartridge information including tape color information about a color of a print surface of a tape-like member housed in the cartridge and an ink color information about a color of an ink ribbon housed in the cartridge; and a display unit that shows a color display of the color of the print surface of the tape-like member and the color of the ink ribbon, based on the tape color information and the ink color information included in the acquired cartridge information.

According to these configurations, based on the cartridge information associated with the identification information read out from the identification information recording unit provided in the cartridge installed in the tape printing device, that is, based on the tape color information about the color of the print surface of the tape-like member and the ink color information about the color of the ink ribbon, the display unit shows a color display of the color of the print surface of the tape-like member and the color of the ink ribbon. Therefore, a print image of the color of the print surface of the tape-like member and the color of the ink ribbon (character color) can be displayed in such a way that the user can specifically grasp the print image.

In the print system, it is preferable that the display unit shows a color display of a print preview image based on the tape color information and the ink color information.

According to this configuration, the display unit shows, in the print preview image, a color display of the print surface of the tape-like member based on the tape color information and shows a color display of print characters, graphic patterns and the like based on the ribbon color information. Therefore, a print image of the tape-like member after printing can be displayed in such a way that the user can specifically grasp the print image.

In the print system, it is preferable that the cartridge information further includes tape pattern design information about a pattern design on the print surface of the tape-like member, and that the display unit displays an image of the pattern design on the print surface of the tape-like member, based on the tape pattern design information.

According to this configuration, the display unit displays an image of the pattern design on the print surface of the tape-like member, based on the tape pattern design information about the pattern design on the print surface of the tape-like member included in the acquired cartridge information. Therefore, an image of the pattern design on the print surface of the tape-like member can be displayed in such a way that the user can specifically grasp the image.

In the print system, it is preferable that the cartridge information further includes tape gloss information about gloss on the print surface of the tape-like member, and that the display unit displays an image of the gloss on the print surface of the tape-like member, based on the tape gloss information.

According to this configuration, the display unit displays an image of the gloss on the print surface of the tape-like member, based on the tape gloss information about the gloss on the print surface of the tape-like member included in the acquired cartridge information. Therefore, an image of the gloss on the print surface of the tape-like member can be displayed in such a way that the user can specifically grasp the image.

In the print system, it is preferable that the cartridge information further includes tape length information about an amount of the tape-like member remaining in the cartridge and ribbon length information about an amount of the ink ribbon remaining in the cartridge, that the print system further includes a remaining amount information update unit that updates the recorded tape length information according to an amount of the tape-like member consumed in the tape printing device and updates the recorded ribbon length information according to an amount of the ink ribbon consumed in the tape printing device, and that the display unit further displays the amount of the remaining tape-like member and the amount of the remaining ink ribbon, based on the tape length information and the ribbon length information included in the acquired cartridge information.

According to this configuration, the display unit displays the amount of the remaining tape-like member and the amount of the remaining ink ribbon, based on the remaining amount information updated according to the amounts of the tape-like member and the ink ribbon consumed in the tape printing device. Therefore, the user can easily grasp the length of the tape-like member and the ink ribbon remaining in the cartridge installed in the tape printing device.

In the print system, it is preferable that the cartridge information further includes cutting characteristic information about a cutting characteristic indicating whether it is appropriate or not to cut the tape-like member with a tape cutter provided in the tape printing device, and that the display unit further shows the cutting characteristic based on the cutting characteristic information included in the acquired cartridge information.

For some tape-like members (for example, a cloth tape-like member or thick tape-like member), it is preferable to avoid cutting with the tape cutter in order to prevent wear of the blade of the tape cutter provided in the tape printing device.

In this respect, according to this configuration, the display unit displays the cutting characteristic based on the cutting characteristic information about the cutting characteristic indicating whether it is appropriate or not to cut the tape-like member with the tape cutter, included in the acquired cartridge information. Therefore, the user can easily grasp whether there is no problem with cutting the tape-like member with the tape cutter.

### BRIEF DESCRIPTION OF THE DRAWINGS

Embodiments of the present invention will now be described by way of further example only and with reference to the accompanying drawings, in which:
FIG. 1 shows the configuration of a print system according to an embodiment of the invention.
FIG. 2 is a block diagram showing the control configuration of the print system.
FIG. 3 is a table showing the colors or the like of the print surfaces of tape-like members housed in first to third cartridges.
FIG. 4 shows an example of an edit window displayed on the touch panel of a portable terminal in the case where the first cartridge is installed in a tape printing device.
FIG. 5 shows an example of an edit window displayed on the touch panel of a portable terminal in the case where the second cartridge is installed in a tape printing device.
FIG. 6 shows an example of an edit window displayed on the touch panel of a portable terminal in the case where the third cartridge is installed in a tape printing device.
FIGS. 7A and 7B show an example of a cartridge information window displayed on the touch panel of a portable terminal in the case where the third cartridge is installed in a tape printing device.

### DESCRIPTION OF EXEMPLARY EMBODIMENTS

Hereinafter, an embodiment of a print system and an information processing device according to the invention will be described with reference to the accompanying drawings.

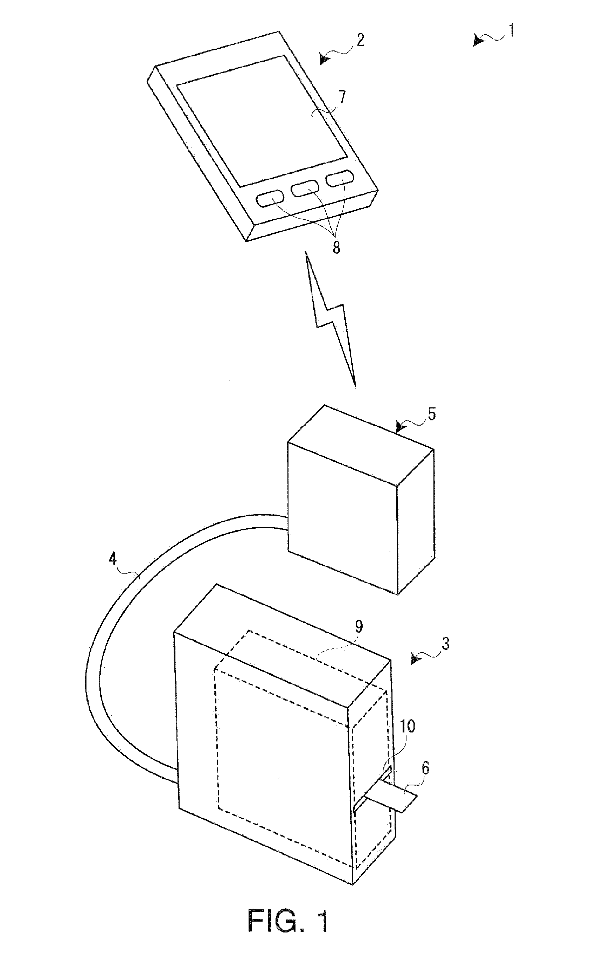

As shown in FIG. 1, a print system 1 according to this embodiment includes a portable terminal 2 as an information processing device, and a tape printing device 3. The tape printing device 3 is wirelessly connected to the portable terminal 2 in a communicable manner via a wireless LAN (local area network) router 5 connected to the tape printing device 3, for example, via a USB (universal serial bus) cable 4. That is, the wireless LAN router 5 functions as a print server. Of course, the tape printing device 3 and the portable terminal 2 may be directly connectable to each other by wireless or wired connection without using the wireless LAN router 5.

In the print system 1, the portable terminal 2 transmits print data created on the basis of the user's input, to the tape printing device 3. The tape printing device 3 prints on a tape-like member 6, based on the print data received from the portable terminal 2.

The portable terminal 2 is a tablet terminal or smartphone and has a touch panel 7 and operation buttons 8. The touch panel 7 functions as a display unit that shows a color display of an edit window 24, later described, to the user, and also detects touch operations in the window by the user (so-called, tap, flip, pinch, drag and the like). The operation buttons 8 are physical operating elements, and specific functions such as power ON/OFF function and application end function are allocated to the operation buttons 8.

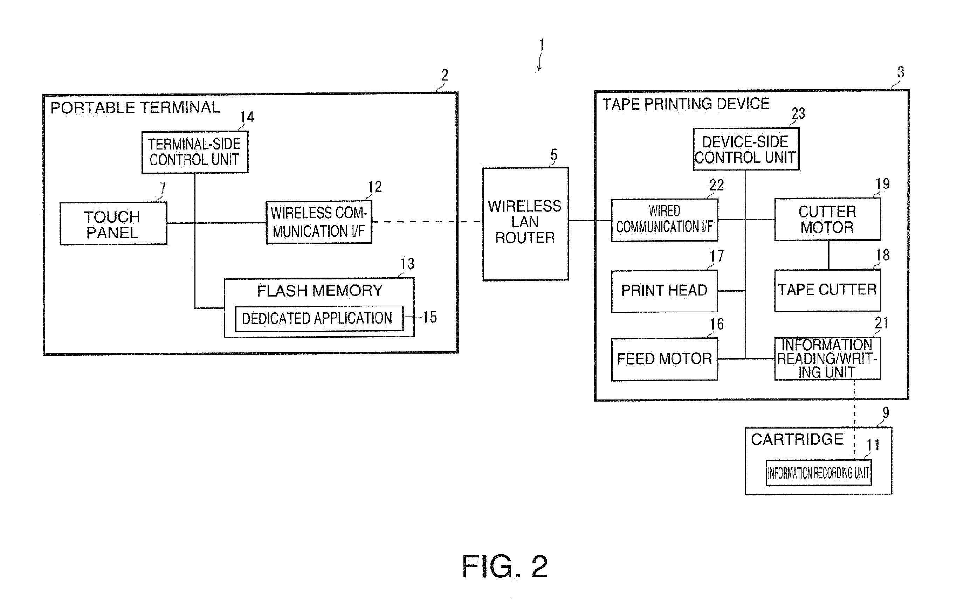

The tape printing device 3 is configured in such a way that a cartridge 9 can be installed in and removed from the tape printing device 3. The cartridge 9 includes a tape-like member 6, an ink ribbon, not shown, a platen roller, and a cartridge case accommodating these components. The tape printing device 3 performs printing while reeling off the tape-like member 6 from the cartridge 9 toward a tape discharge port 10, based on the print data received from the portable terminal 2. A printed portion of the tape-like member 6 is cut off by a tape cutter 18 (see FIG. 2) provided in the tape printing device 3 or by scissors or the like provided outside the device. The cut-off tape piece is used as a label or the like.

As the cartridge 9, plural types containing tape-like members 6 having different colors, glosses, pattern designs, widths and materials and containing ink ribbons having different colors, widths and the like are prepared. An information recording unit 11 (cartridge information recording unit) having cartridge information, later described, recorded therein is installed in the cartridge 9. The information recording unit 11 is formed by an RFID (radio frequency identification) tag, and though not shown, has a rewritable IC chip and a tag-side antenna for non-contact transmission and reception of cartridge information. A contact-type IC tag may be used instead of RFID.

Next, the control configuration of the print system 1 will be described with reference to FIG. 2. The portable terminal 2 has a touch panel 7, a wireless communication interface 12, a flash memory 13, and a terminal-side control unit 14.

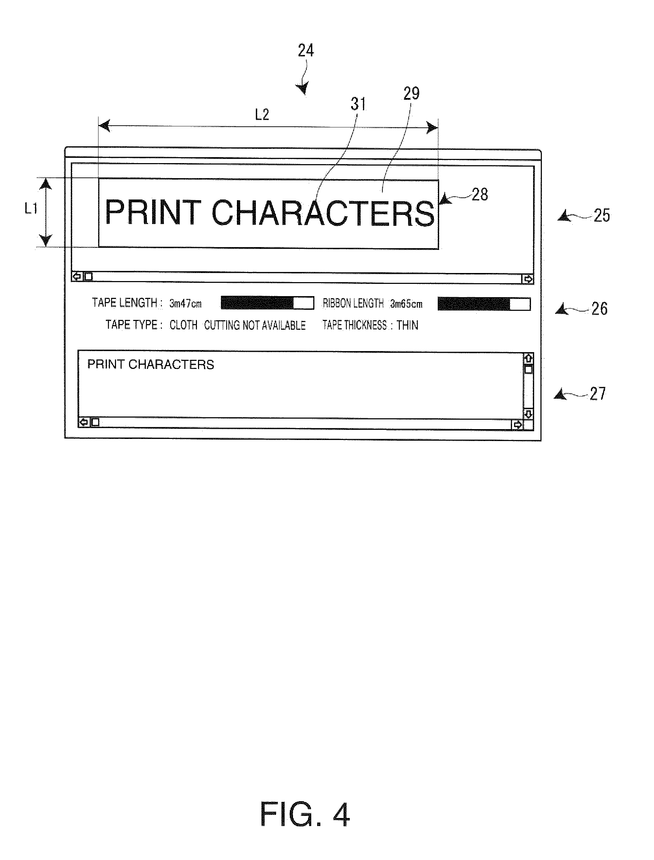

The wireless communication interface 12 is configured to communicate with the wireless LAN router 5. The wireless communication interface 12 is used for transmission and reception of print data, cartridge information and the like, and functions as a cartridge information acquisition unit. The flash memory 13 stores a dedicated application 15. The dedicated application 15 is an application to show an edit window 24 (see FIG. 4 or the like), later described, on the touch panel 7, and to create print data based on the user's input (touch operation) in the edit window 24. The dedicated application 15 is downloaded and installed from a predetermined server (website).

The terminal-side control unit 14 includes a CPU (central processing unit), a ROM (read only memory), a RAM (random access memory) and the like, and controls various kinds of processing such as print data generation processing based on the dedicated application 15, communication processing with the tape printing device 3, display control processing on the touch panel 7, and operation detection control processing on the touch panel 7.

Meanwhile, the tape printing device 3 includes a feed motor 16, a print head 17, a tape cutter 18, a cutter motor 19, an information reading/writing unit 21, a wired communication interface 22, and a device-side control unit 23.

The feed motor 16 rotationally drives the platen roller. The print head 17 is a thermal-type print head. The print head 17 and the platen roller cooperate to print on the tape-like member 6 while reeling off and feeding the tape-like member 6 and the ink ribbon held between the print head 17 and the platen roller. The tape cutter 18 cuts the tape-like member 6 fed thereto, in the direction of tape width. The cutter motor 19 causes the tape cutter 18 to perform the cutting operation.

The information reading/writing unit 21 has a device-side antenna (not shown) and reads and writes cartridge information from and to the information recording unit 11. The wired communication interface 22 is formed by a USB interface or the like and used for transmission and reception of print data, cartridge information and the like.

The device-side control unit 23 includes a CPU, a ROM, a RAM and the like and controls each part of the tape printing device 3. Control programs and control information for the CPU to perform various controls are stored in the ROM. The control programs may include a command analysis program to analyze various commands transmitted from the portable terminal 2, a print/cutting processing program to carry out print processing and cutting processing, and the like.

In the print system 1 configured as described above, as the user installs the cartridge 9 in the tape printing device 3, then in the tape printing device 3, the information reading/writing unit 21 (cartridge information reading unit) reads out cartridge information from the information recording unit 11 provided in the installed cartridge 9. Also, in the tape printing device 3, the wired communication interface 22 transmits the read-out cartridge information to the portable terminal 2. In the portable terminal 2, as the wireless communication interface 12 receives the cartridge information transmitted from the tape printing device 3, the touch panel 7 displays an edit window 24, later described, based on the received cartridge information.

As the user gives an instruction to execute printing after editing a text to be printed, in the edit window 24, the portable terminal 2 transmits print data to the tape printing device 3, and the tape printing device 3 performs print and cutting processing based on the transmitted print data.

Next, the edit window 24 displayed on the portable terminal 2 will be specifically described. The edit window 24 is displayed on the basis of the cartridge information transmitted from the tape printing device 3. Thus, first, the cartridge information recorded in the information recording unit 11 of the cartridge 9 will be explained.

The cartridge information includes, for example, tape color information, tape gloss information, tape pattern design information, initial tape length information, tape length information, tape width information, tape material information, tape thickness information, cutting characteristic information, ribbon color information, initial ribbon length information, ribbon length information, print condition information, medium category information, and the like.

The tape color information is information about the color of the print surface of the tape-like member 6. The tape color information is expressed, for example, by 8-bit values respectively indicating the diffuse reflectance of each of RGB colors, and 8 bits of alpha channel indicating the transmittance for a transparent tape. The light source incident angle of diffuse reflection may be preferably 30 to 70 degrees, and for example, 60 degrees, if the direction of a tape normal line is 90 degrees. Instead of or in addition to the 8 bits each for RGB, 8 bits of CYMK (subtractive color process) may be used to express the tape color information. Also, the tape color information may include color space information indicating color range and color temperature of white points.

The tape gloss information is information about the gloss on the print surface of the tape-like member 6. The tape gloss information is expressed by 8-bit values respectively indicating the regular reflectance of each of RGB or CYMK colors, since the spectroscopic method and the light source are the same as with the tape color information, or simply by an 8-bit value indicating the degree of gloss. Also, the tape gloss information may be expressed simply as the presence or absence of gloss.

The tape pattern design information is information about the pattern design (background pattern, picture pattern and the like) on the print surface of the tape-like member 6. The tape pattern design information is information about the presence or absence of a pattern design, the name of the pattern design, image data of the pattern design, the presence or absence of tiling (repetitive pattern) and the like. The image data format of the pattern design may be any of bitmap image such as TIFF, PS (POSTSCRIPT (trademark registered)), and vector image such as SVG (scalable vector graphics).

The initial tape length information is information about the length of the tape-like member 6 housed in the cartridge 9 before use, that is, the initial tape length of the tape-like member 6. The tape length information is information about the length of the tape-like member 6. After each print processing is finished, the tape length information is updated according to the amount of the tape-like member 6 consumed in the print processing. The tape width information is information about the tape width of the tape-like member 6.

The tape material information is information about the material of the tape-like member 6. The tape thickness information is information about the thickness of the tape-like member 6. The cutting characteristic information is information about the cutting characteristic, that is, whether it is appropriate to cut the tape-like member 6 with the tape cutter 18 or not. The cutting characteristic is set according to the material of the tape-like member 6. For example, if the tape-like member 6 is made of a PET (polyethylene terephthalate) film, the cutting characteristic is "appropriate". If the tape-like member 6 is made of a cloth, the cutting characteristic is "inappropriate". The cutting characteristic may also be set according to the thickness of the tape-like member 6 instead of or in addition to the material of the tape-like member 6.

The ribbon color information is information about the color of the ink ribbon. As in the case of the tape color information, the ribbon color information is expressed, for example, by 8-bit values respectively indicating the diffuse reflectance of each of RGB colors, or in case of a transparent tape, 8-bit values indicating the transmittance of each of RGB colors, since the spectroscopic method and the light source are the same as with the tape color information. The ribbon color information may be expressed by 8-bit values of CYMK instead of the 8 bits of RGB.

The initial ribbon length information is information about the length of the ink ribbon housed in the cartridge 9 before use, that is, the initial ribbon length of the ink ribbon. The ribbon length information is information about the length of the remaining ink ribbon. As in the case of the tape-length information, after each print processing is finished, the ribbon length information is updated according to the amount of the ink ribbon consumed in the print processing.

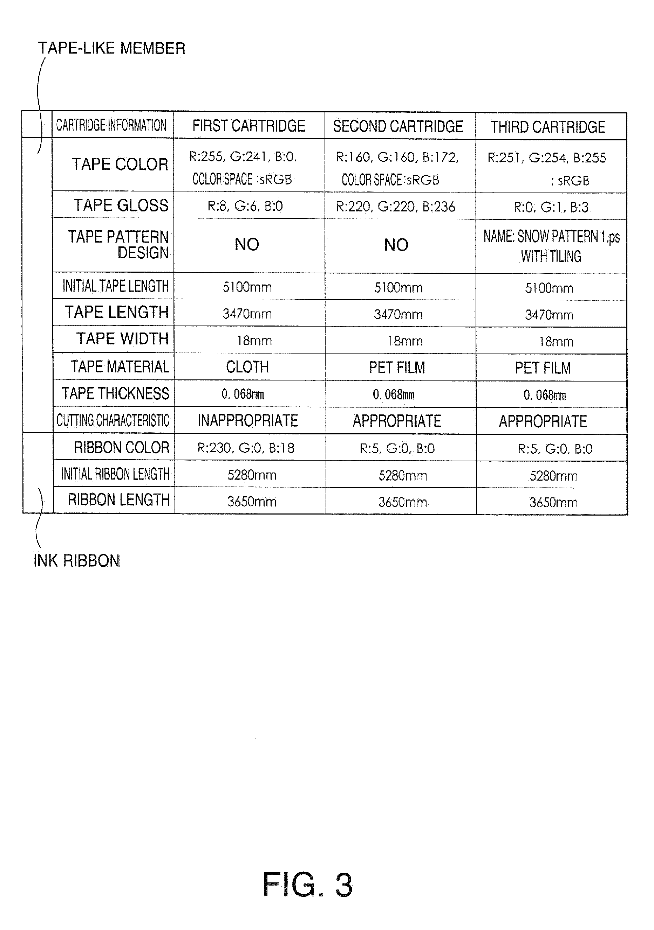

The print condition information (not shown in Fig. 3) includes information such as a limit value of print density (heating temperature of the print head 17) and a limit value of print speed according to the material of the tape-like member 6, a y characteristic value for the print density corresponding to the combination of the tape-like member 6 and the ink ribbon, and the like. The medium category information (not shown in Fig. 3) includes information such as whether the tape-like member 6 is provided with a release paper or not, whether the tape-like member 6 is already cut like a die-cut label or not, and the like.

FIG. 3 is a table showing the colors of the print surfaces of tape-like members 6 housed in three types of cartridge 9 (first to third cartridges) containing different tape-like members 6 and ink ribbons. For example, the cartridge information recorded in the information recording unit 11 of the first cartridge is as follows.
Cartridge information
   Tape color information: R=255, G=241, B=0, color space = sRGB
   Tape gloss information: R=8, G=6, B=0
   Tape pattern design information: None
   Initial tape length information: 5100 mm
   Tape length information: 3470 mm
   Tape width information: 18 mm
   Tape material information: cloth
   Tape thickness information: 0.068 mm
   Cutting characteristic: inappropriate
   Ribbon color information: R=230, G=0, B=18
   Initial ribbon length: 5280 mm
   Ribbon length information: 6350 mm

As shown in FIG. 4, the edit window 24 has, in order from above, a preview display area 25, a cartridge information display area 26, and a text edit area 27.

The text edit area 27 is an area for the user to edit a text to be printed. For example, as the user taps on the text edit area 27, a software keyboard (not shown) is displayed in the edit window 24 and text editing becomes available. Here, it is assumed that "PRINT CHARACTERS" are inputted.

The preview display area 25 is an area for displaying a print preview image 28. On the touch panel 7, the color of the print surface (preview print surface 29) of the tape-like member 6 in the print preview image 28 is displayed as yellow in the preview display area 25, based on the acquired tape color information for the first cartridge. Similarly, on the touch panel 7, the color of the print characters (preview print characters 31) in the print preview image 28 is displayed as red, based on the acquired ribbon color information.

Also, on the touch panel 7, the tape width (preview tape width L1) in the print preview image 28 is in the actual size of 18 mm, based on the acquired tape width information. Moreover, on the touch panel 7, the tape length (preview tape length L2) in the print preview image 28 is display in the actual size, based on the tape length calculated by the terminal-side control unit 14 on the basis of the number of characters in the text, the size of the characters and the like, or based on the tape length designated by the user. It is preferable that the print preview image 28 displayed in the actual size can be enlarged and reduced.

The cartridge information display area 26 is an area for displaying the amount of the remaining tape or the like. On the touch panel 7, the tape length "3 m 47 cm" is displayed in the cartridge information display area 26, based on the acquired tape length information, and a bar chart indicating the proportion of the amount of the remaining tape to the initial tape length also is displayed. Similarly, on the touch panel 7, the ribbon length "3 m 65 cm" is displayed in the cartridge information display area 26, based on the acquired ribbon length information, and a bar chart indicating the proportion of the amount of the remaining ink ribbon to the initial ribbon length is also displayed.

If the preview tape length L2 is 100 mm, after print and cutting processing, the tape length information is updated to 3370 mm and the ribbon length information is updated to 3550 mm on the basis of this tape length, and the tape length and the ribbon length are displayed, based on the updated tape length information and ribbon length information. That is, in the tape printing device 3, after print and cutting processing, the device-side control unit 23 calculates the amount of the remaining tape and the amount of the remaining ribbon after the print and cutting processing, according to the tape length included in the print data. Based on the result of the calculation, the information reading/writing unit 21 (remaining amount update unit) updates the tape length information and the ribbon length information recorded in the information recording unit 11. While, in this embodiment, the tape length included in the print data is the amount of the tape-like member 6 consumed and the amount of the ink ribbon consumed, the amount of the tape-like member 6 or the ink ribbon that is fed may be detected and the result of the detection may be used as the amount of the tape-like member 6 consumed or the amount of the ink ribbon consumed, to update the tape length information and the ribbon length information.

In this manner, the touch panel 7 displays the amount of the remaining tape and the amount of the remaining ribbon, based on the tape length information and the ribbon length information updated according to the amounts of the tape-like member 6 and the ink ribbon consumed in the tape printing device 3. Therefore, the user can easily grasp the length of the tape-like member 6 and the ink ribbon left in the cartridge 9 installed in the tape printing device 3.

Also, the touch panel 7 displays "cloth" as the tape type (tape material) in the cartridge information display area 26, based on the acquired tape material information, and also displays "68 µm" or "thin" as the tape thickness based on the acquired tape thickness information. Moreover, the touch panel 7 displays "no cutting available" as the cutting characteristic in the cartridge information display area 26, based on the acquired cutting characteristic information.

In this manner, the touch panel 7 displays the cutting characteristic based on the cutting characteristic information included in the acquired cartridge information. Therefore, the user can easily grasp whether there is any problem with cutting the tape-like member 6 with the tape cutter 18. In response to the display of "no cutting available", the user can set the portable terminal 2 or the tape printing device 3 in such a way that the tape printing device 3 will not carry out cutting of the tape-like member 6 with the tape cutter 18 after print processing.

Information associating at least one of the tape material information and the tape thickness information with the cutting characteristic information may be recorded in the portable terminal 2, and the touch panel 7 may display the cutting characteristic based on the cutting characteristic information associated with the acquired tape material information or tape thickness information.

Next, the display in the edit window 24 in the case where the second cartridge is installed in the tape printing device 3 will be described. The second cartridge houses a tape-like member 6 and an ink ribbon that are substantially similar to those of the first cartridge. However, the second cartridge is different from the first cartridge in that the color of the print surface of the tape-like member 6 is "gray", the presence or absence of gloss on the print surface of the tape-like member 6 is "with gloss", the material of the tape-like member 6 is "PET film", the cutting characteristic is "appropriate", and the color of the ink ribbon is "black" (see FIG. 3). Therefore, the cartridge information recorded in the information recording unit 11 of the second cartridge is substantially similar to that of the first cartridge but different in that the tape color information is "R=160, G=160, B=172, color space = sRGB", the tape gloss information is "R=220, G=220, B=236", the tape material information is "PET film", the cutting characteristic is "appropriate", and the ribbon color information is "R=5, G=0, B=0".

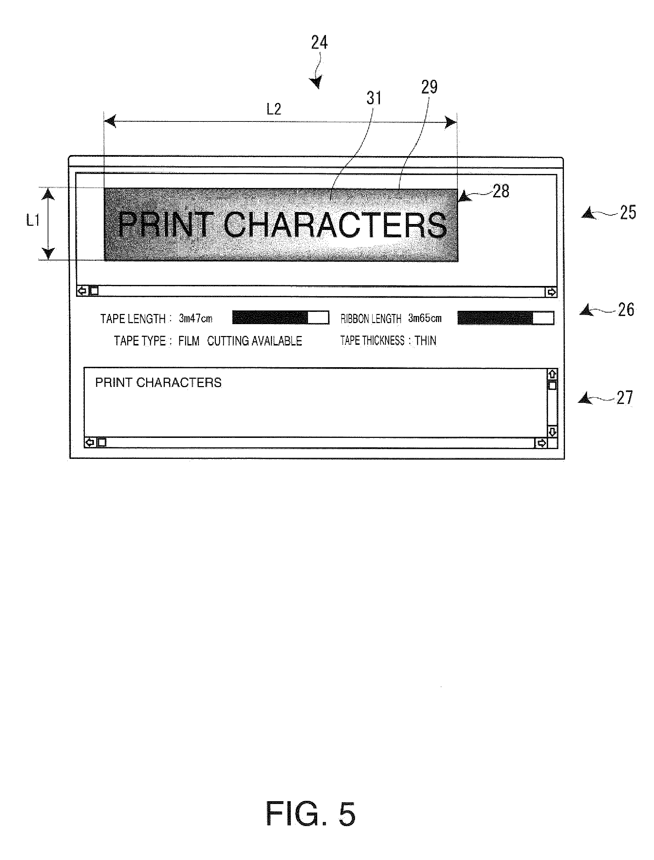

In this case, as shown in FIG. 5, the touch panel 7 displays the print preview image 28 in the preview display area 25, and the amount of the remaining tape or the like in the cartridge information display area 26, in a substantially similar manner to the case of the first cartridge. However, the touch panel 7 displays the color of the preview print surface 29 as being gray and with gloss, based on the acquired tape color information and tape gloss information. Here, being "with gloss" is expressed, for example, by partially displaying a white spot and showing gradation from the spot toward the peripheries thereof. The touch panel 7 also displays "film" as the tape type and "cutting available" as the cutting characteristic, in the cartridge information display area 26.

Next, the display in the edit window 24 in the case where the third cartridge is installed in the tape printing device 3 will be described. The third cartridge houses a tape-like member 6 and an ink ribbon that are substantially similar to those of the second cartridge. However, the third cartridge is different from the second cartridge in that the color of the print surface of the tape-like member 6 is "white" and the pattern design on the print surface is "snow pattern 1, with tiling" (see FIG. 3). Therefore, the cartridge information recorded in the information recording unit 11 of the third cartridge is substantially similar to that of the second cartridge but different in that the tape color information is "R=251, G=254, B=255, color space = sRGB", the tape gloss information is "R=0, G=1, B=3", and the tape pattern design information is "name = snow pattern 1.ps (image data), with tiling".

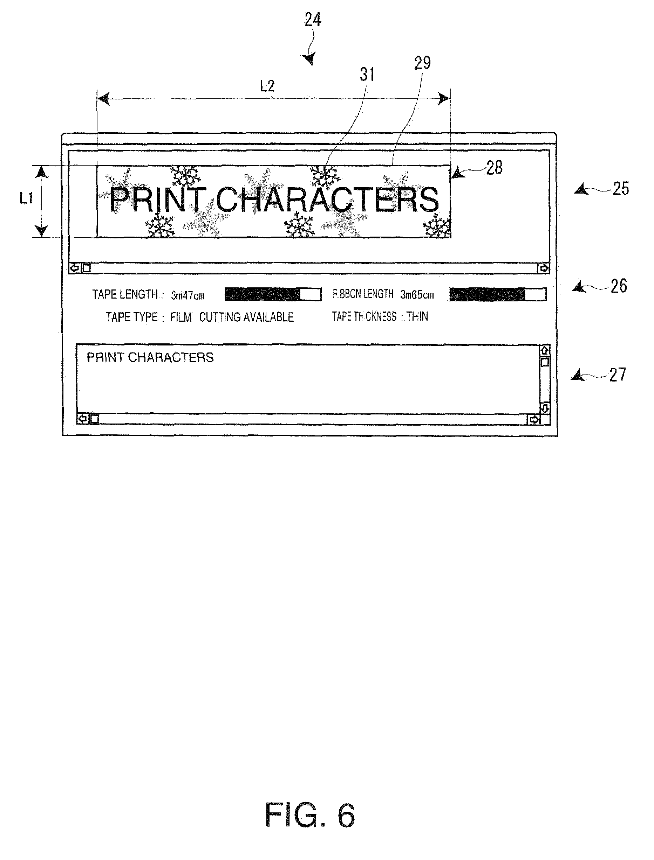

In this case, as shown in FIG. 6, the touch panel 7 displays the print preview image 28 in the preview display area 25, and the amount of the remaining tape or the like in the cartridge information display area 26, in a substantially similar manner to the case of the second cartridge. However, the touch panel 7 displays the color of the preview print surface 29 as being white and without gloss, based on the acquired tape color information, and displays an image of the pattern design on the print surface of the tape-like member 6, based on the acquired tape pattern design information (image data). Also, if the tape pattern design information is "with tiling", an image in which the tape pattern design is arranged in the way of laying tiles over the entire surface of the tape is displayed.

In this manner, the touch panel 7 displays the image of the pattern design on the print surface of the tape-like member 6, based on the tape pattern design information about the pattern design on the print surface of the tape-like member 6 included in the acquired cartridge information. Therefore, the image of the pattern design on the print surface of the tape-like member 6 can be displayed in such a way that the user can specifically grasp the image. This is particularly convenient since the user can confirm the positional relation between the characters or the like to be printed and the pattern design (degree of overlapping) in the print preview image 28, before printing.

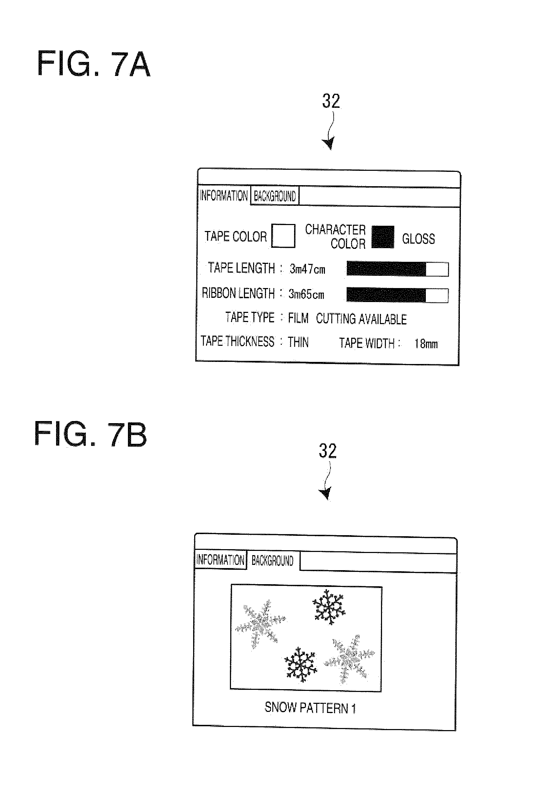

In the arrangement shown in FIGS. 7A and 7B, the touch panel 7 displays a cartridge information window 32 as a different window from the edit window 24 or in a different area from the text edit area 27 or the like in the edit window 24. Hereinafter, an example where the third cartridge is installed will be described.

As shown in FIG. 7A, the touch panel 7 displays the tape color (color of the print surface of the tape-like member 6), the character color (color of the ink ribbon), the presence or absence of gloss and the tape width, in an "information" tab in the cartridge information window 32. That is, the touch panel 7 shows a color display of the tape color information and also displays the presence or absence of gloss, based on the tape color information, also shows a color display of the character color based on the ribbon color information, and displays the numeric value of the tape width based on the tape width information. The touch panel 7 also displays the amount of the remaining tape and the like in the "information" tab in the cartridge information window 32, in a similar manner to the cartridge information display area 26 in the edit window 24.

Moreover, as shown in FIG. 7B, the touch panel 7 displays an image of the pattern design and the name of the pattern design "snow pattern 1" based on the tape design pattern information (image data), in a "background" tab in the cartridge information window 32.

As described above, in the print system 1 and the portable terminal 2 according to this embodiment, the touch panel 7 shows a color display of the color of the print surface of the tape-like member 6 and the color of the ink ribbon in the edit window 24 and the cartridge information window 32, based on the cartridge information read out from the information recording unit 11 of the cartridge 9 installed in the tape printing device 3, that is, based on the tape color information about the color of the print surface of the tape-like member 6 and the ink color information about the color of the ink ribbon. Therefore, a print image of the color of the print surface of the tape-like member 6 and the color of the ink ribbon (character color) can be displayed in such a way that the user can specifically grasp the print image.

Also, the touch panel 7 shows, in the print preview image 28, a color display of the print surface of the tape-like member 6 based on the tape color information and also shows a color display of the print characters, graphic patterns and the like based on the ribbon color information. Therefore, a print image of the tape-like member 6 (label or the like) after printing can be displayed in such a way that the user can specifically grasp the print image.

Moreover, the touch panel 7 not only shows a color display of the print preview image 28 in the edit window 24 but also displays the cartridge information window 32. Therefore, even before inputting a text, the user can specifically grasp a print image of the color of the ink ribbon (character color). Of course, the touch panel 7 may be configured to display one of the edit window 24 and the cartridge information window 32.

In this embodiment, the portable terminal 2 is used as an example of an information processing device. However, a laptop PC (personal computer), desktop PC or the like may also be used. It should be noted that since the portable terminal 2 of this embodiment tends to be operated by the user in a remote location from the tape printing device 3, it is difficult for the user to confirm the color of the print surface of the tape-like member 6, the color of the ink ribbon, the pattern design on the tape print surface and the presence or absence of gloss while directly seeing the cartridge 9. Therefore, the technique according to the invention is particularly advantageous in that it enables the user to grasp a specific print image of the color of the print surface of the tape-like member 6, the color of the ink ribbon, the pattern design on the tape print surface and the gloss, on the touch panel 7 of the portable terminal 2.

Also, the embodiment is configured to record cartridge information in the information recording unit 11 provided in the cartridge 9. However, cloud computing may be utilized. That is, association information that associates cartridge information with identification information that is unique to the cartridge 9 is recorded in advance in a management server (association information recording unit) on the web. The identification information is recorded in advance in the information recording unit 11 (identification information recording unit).

Then, in the tape printing device 3, the information reading/writing unit 21 (identification information reading unit) reads out the identification information from the information recording unit 11 of the cartridge 9 installed therein. Moreover, in the tape printing device 3, the wired communication interface 22 transmits the read-out identification information to the portable terminal 2. In the portable terminal 2, the wireless communication interface 12 (identification information acquisition unit, cartridge information acquisition unit) receives the identification information transmitted from the tape printing device 3 and refers to the association information via the network, thus acquiring the cartridge information associated with the received identification information. As for tape length information and ribbon length information, the tape lengths on the print data (the amounts of the tape-like member 6 and the ink ribbon consumed) are transmitted together with the identification information to the management server via the network, and updated on the management server side.

If cloud computing is utilized in this manner, the information recording unit 11 need not be rewritable. It is also possible to use a label or the like on which a non-rewritable RFID tag, contact-type IC tag or two-dimensional code is printed, instead of the rewritable RFID tag or contact-type IC tag. Also, cartridge information that needs rewriting such as tape length information and ink length information may be recorded in advance in the management server, whereas cartridge information that need not be rewritten such as tape color information may be recorded in the information recording unit 11 of the cartridge 9.

In the embodiment, the single cartridge 9 housing the tape-like member 6 and the ink ribbon is installed in the tape printing device 3. However, though not shown, a tape cartridge housing the tape-like member 6 and a ribbon cartridge housing the ink ribbon may be separately installed. In such a case, it is possible to replace only the tape cartridge or to replace only the ribbon cartridge. Then, the cartridge information about the tape-like member 6 such as tape color information and tape length information is recorded in advance in the information recording unit 11 of the tape cartridge, and the cartridge information about the ink ribbon such as ribbon color information and ribbon length information is recorded in advance in the information recording unit 11 of the ribbon cartridge. Thus, even if only one of the tape cartridge and the ribbon cartridge is replaced, the tape length information and the ribbon length information can be properly updated. Likewise, the above-described cloud-computing arrangements can be used for separate tape and ribbon cartridges.

The foregoing description has been given by way of example only and it will be appreciated by a person skilled in the art that modifications can be made without departing from the scope of the present invention. For example, the tape printing device 3 may be wirelessly connected to the wireless LAN router.

## Claims

1. A print system (1) comprising:
a cartridge information reading unit (21) for reading out cartridge information including tape color information about a color of a print surface of a tape-like member housed in a cartridge (9) installed in a tape printing device (3) and ink color information about a color of an ink ribbon housed in the cartridge, from a cartridge information recording unit (11) provided in the cartridge;
a cartridge information acquisition unit (12) for acquiring the cartridge information that is read out; and
a display unit (7) for showing a color display of the color of the print surface of the tape-like member and the color of the ink ribbon, based on the tape color information and the ink color information included in the cartridge information that is acquired.

2. A print system (1) comprising:
an identification information reading unit (21) for reading out identification information specific to a cartridge (9) installed in a tape printing device (3), from an identification information recording unit (11) provided in the cartridge;
an association information recording unit for recording association information which associates the identification information with cartridge information including tape color information about a color of a print surface of a tape-like member housed in the cartridge (9) and an ink color information about a color of an ink ribbon housed in the cartridge;
an identification information acquisition unit (12) for acquiring the identification information that is read out;
a cartridge information acquisition unit (12) for acquiring the cartridge information associated with the identification information that is acquired; and
a display unit (7) for showing a color display of the color of the print surface of the tape-like member and the color of the ink ribbon, based on the tape color information and the ink color information included in the cartridge information that is acquired.

3. The print system according to claim 1 or claim 2, wherein the display unit shows a color display of a print preview image (28) based on the tape color information and the ink color information.

4. The print system according to any one of the preceding claims, wherein the cartridge information further includes tape pattern design information about a pattern design on the print surface of the tape-like member, and
the display unit is arranged to display an image of the pattern design on the print surface of the tape-like member, based on the tape pattern design information.

5. The print system according to any one of the preceding claims, wherein the cartridge information further includes tape gloss information about gloss on the print surface of the tape-like member, and
the display unit is arranged to display an image of the gloss on the print surface of the tape-like member, based on the tape gloss information.

6. The print system according to any one of the preceding claims, wherein the cartridge information further includes tape length information about an amount of the tape-like member remaining in the cartridge and ribbon length information about an amount of the ink ribbon remaining in the cartridge,
the print system further includes a remaining amount information update unit (21) for updating the tape length information that is recorded, according to an amount of the tape-like member consumed in the tape printing device, and updating the ribbon length information that is recorded, according to an amount of the ink ribbon consumed in the tape printing device, and
the display unit is arranged to further display the amount of the remaining tape-like member and the amount of the remaining ink ribbon, based on the tape length information and the ribbon length information included in the cartridge information that is acquired.

7. The print system according to any one of the preceding claims, wherein the cartridge information further includes cutting characteristic information about a cutting characteristic indicating whether it is appropriate or not to cut the tape-like member with a tape cutter (18) provided in the tape printing device (3), and
the display unit is arranged to further show the cutting characteristic based on the cutting characteristic information included in the cartridge information that is acquired.

8. An information processing device (2) comprising:
a cartridge information acquisition unit (12) for acquiring cartridge information including tape color information about a color of a print surface of tape-like member housed in a cartridge (9) installed in a tape printing device (3) and ink color information about a color of an ink ribbon housed in the cartridge, read out from a cartridge information recording unit (11) provided in the cartridge; and
a display unit (7) for showing a color display of the color of the print surface of the tape-like member and the color of the ink ribbon, based on the tape color information and the ink color information included in the cartridge information that is acquired.

9. An information processing device (2) comprising:
an identification information acquisition unit (12) for acquiring identification information specific to a cartridge (9) installed in a tape printing device (3), read out from an identification information recording unit (11) provided in the cartridge;
a cartridge information acquisition unit (12) for acquiring cartridge information associated with the identification information that is acquired, based on association information which associates the identification information with the cartridge information including tape color information about a color of a print surface of a tape-like member housed in the cartridge and an ink color information about a color of an ink ribbon housed in the cartridge; and
a display unit (7) for showing a color display of the color of the print surface of the tape-like member and the color of the ink ribbon, based on the tape color information and the ink color information included in the cartridge information that is acquired.
